# EUROPEAN PATENT SPECIFICATION

(11) **EP 4 117 604 B1**
(45) Date of publication and mention of the grant of the patent: **11.11.2026**
(21) Application number: 21768597.3
(22) Date of filing: 08.03.2021
(51) Int. Cl.: A61J 1/14, A61J 1/20, A61J 7/00, G01N 1/34, G01N 1/38, G01N 1/10, G01N 1/40, G01N 35/10

(54) **INSERT AND METHOD FOR REMOVING A TARGETED COMPONENT OF A LIQUID SAMPLE**
EINSATZ UND VERFAHREN ZUR ENTFERNUNG EINER BESTIMMTEN KOMPONENTE AUS EINER FLÜSSIGKEITSPROBE
INSERT ET MÉTHODE D'ÉLIMINATION D'UN COMPOSANT CIBLÉ D'UN ÉCHANTILLON LIQUIDE

(30) Priority: 09.03.2020 US 202062987077 P
(43) Date of publication of application: 18.01.2023
(73) Proprietor: IDEXX Laboratories, Inc., Westbrook, ME 04092 (US)
(72) Inventor: FALLER, Jesse, Daniel, Portland, ME 04102 (US); LACHAPELLE, Robert, W., Leeds, ME 04263 (US); PELLETIER, Dominic, Raymond, ME 04071 (US)
(74) Representative: Meissner Bolte Partnerschaft mbB
(86) International application number: PCT/US2021/021359
(87) International publication number: WO 2021/183434

(56) References cited:
- US-A- 5 073 344
- US-A- 5 869 347
- US-A1- 2004 171 169
- US-A1- 2006 110 295
- US-A1- 2007 143 063
- US-A1- 2010 092 980
- US-A1- 2012 202 238
- SIMMS ET AL.: "Development of Zinc Chelating Resin Polymer Beads for the Removal of Cell - Free Hemoglobin.", ANNALS OF BIOMEDICAL ENGINEERING, vol. 47, no. 6, 27 March 2019 (2019-03-27), pages 1470 - 1478, XP036776757, DOI: 10.1007/s10439-019-02249-6

## Description

### CROSS-REFERENCE TO RELATED APPLICATIONS

This application is related to U.S. Provisional Patent Application Serial No. 62/987,077, filed on March 9, 2020, and titled "Matrix And Associated Sample Or Mixing Cup Used For Removing Components Of A Liquid Sample", the disclosure on which priority is hereby claimed.

This application is also related to U.S. Provisional Patent Application Serial No. 62/986,988, filed March 9, 2020, and titled "Method for Removing Interfering Components of a Liquid Sample Prior to Dispensing Same on a Chemical Reagent Test Slide", naming IDEXX Laboratories, Inc. as the applicant, the disclosure of which is incorporated herein by reference.

### BACKGROUND OF THE INVENTION

### Field of the Invention

The present invention generally relates to techniques for removing components from a liquid sample, and more particularly relates to methods, devices and other aids which are employed to remove components, such as proteins, hemoglobin, analytes and other constituents, from a blood sample.

### Description of the Related Art

Aforementioned U.S. Patent Application Serial No. 62/986,988 (hereinafter, the "IDEXX patent application") discloses novel methods and devices which may be used to remove a component of a liquid sample, such as whole blood, diluted blood, plasma, serum or the like (generally referred to herein as a "blood sample") which may interfere with tests performed or measurements taken by an automated chemical analyzer, such as those manufactured and sold by IDEXX Laboratories, Inc. under the trademarks VetTest^{®}, Catalyst Dx^{®} and Catalyst One^{®}. For example, hemoglobin in a blood sample may affect the accuracy of measurements performed on bile acid assays. The aforementioned IDEXX patent application describes methods employing porous and non-porous beads, such as agarose-based and silica-based beads, held in a mixing cup to which the blood sample is added. Hemoglobin in the blood sample adheres to the beads, and the hemoglobin-attached beads settle by gravity over time to the lower portion of the cup. The hemoglobin-free blood sample occupying the upper portion of the cup may now by aspirated by a pipette of a sample metering device forming part of the chemical analyzer and deposited on a test slide.

US 2004/171169 A1 relates to a hollow-fiber membrane sample preparation multi-well plate for enriching and cleaning up samples. US 2006/110295 A1 relates to a device and method for performing well plate surface sorption extraction.

### OBJECTS AND SUMMARY OF THE INVENTION

The present invention relates to an insert mounted or insertable in a mixing cup and used by an automated chemical analyzer for removing a targeted component of a liquid sample, as defined in claim 1, and to a method using an automated chemical analyzer for removing a targeted component of a liquid sample, as defined in claim 12. Preferred features of the invention are set out in the dependent claims.

In accordance with one form of the present invention, a matrix is formed of porous media through which fluid can flow. In one form, the matrix holds in an immobilized state functionalized particles that remove a component of a fluid flowing through the matrix. For example, the porous matrix immobilizes porous or non-porous agarose-based IMAC (Immobilized Metal Affinity Chromatography) beads or silica-based IMAC beads, or other functionalized particles, to which a component or components of a liquid sample passing through the matrix adhere. Such components are thus removed from the liquid sample, or their concentration therein is lowered, to provide a filtered liquid sample which may be dispensed on a chemical reagent test slide or a sample holding cuvette of an automated chemical analyzer.

The matrix may be in the form of an insert or plug that forms part of a sample or mixing cup, reagent cup, or a centrifuge cup, used by the automated chemical analyzer. For example, a blood sample is aspirated from a sample cup into a disposable tip fitted on the end of a pipette connected to a pump of a sample metering device forming part of the automated chemical analyzer, and is transferred to the mixing cup containing the matrix by the pipette expelling the blood sample from the tip into the cup. The blood sample, drawn into the matrix by capillary action or forced into the matrix under the influence of hydraulic or pneumatic pressure from the pipette and pump connected thereto, flows through the matrix residing in the mixing cup either once or multiple times, as needed.

A targeted component of the blood sample, such as hemoglobin, for example, has an affinity for and adheres to the functionalized particles, such as the IMAC beads mentioned previously, that are immobilized by the matrix, and is removed from the blood sample or at least its concentration therein is lowered. The filtered blood sample filling the matrix is withdrawn from the matrix under negative fluid pressure caused by the reverse pumping action of the pipette and flows out through the matrix at the lower portion of the mixing cup, where it is re-aspirated by the pipette and, if necessary, re-introduced to the matrix in the mixing cup multiple times until the targeted component of the filtered blood sample is completely removed or a desired concentration of the component in the filtered blood sample is achieved.

These and other objects, features and advantages of the present invention will be apparent from the following detailed description of illustrative embodiments thereof, which is to be read in connection with the accompanying drawings.

### BRIEF DESCRIPTION OF THE DRAWINGS

Figure 1 is a bottom perspective view of one form of a matrix of the present invention that is shaped as an insert or plug that is receivable in a sample, reagent or mixing cup and which is formed of or carries in an immobilized state functionalized particles to which adheres a targeted component of a liquid sample added to the cup.
Figure 2 is a top perspective view of the matrix insert or plug of the present shown in Figure 1.
Figure 3 is a top plan view of the matrix insert or plug of the present invention shown in Figures 1 and 2.
Figure 4 is a bottom plan view of the matrix insert or plug of the present invention shown in Figures 1-3.
Figure 5 is a side elevational view of the matrix insert or plug of the present invention shown in Figures 1-4.
Figure 6 is a cross-sectional view of the matrix insert or plug of the present invention shown in Figures 1-5, taken along line 6-6 of Figure 5, along with a cross-sectional view of a mixing cup into which the matrix insert or plug is received.
Figure 7 is a bottom perspective view of another form of a matrix of the present invention that is shaped as an insert or plug that is receivable in a sample, reagent or mixing cup and which is formed of or carries in an immobilized state functionalized particles to which adheres a targeted component of a liquid sample added to the cup.
Figure 8 is a top perspective view of the matrix insert or plug of the present invention shown in Figure 7.
Figure 9 is a top plan view of the matrix insert or plug of the present invention shown in Figures 7 and 8.
Figure 10 is a bottom plan view of the matrix insert or plug of the present invention shown in Figures 7-9.
Figure 11 is a side elevational view of the matrix insert or plug of the present invention shown in Figures 7-10.
Figure 12 is a cross-sectional view of the matrix insert or plug of the present invention shown in Figures 7-11, taken along line 12-12 of Figure 11, along with a cross-sectional view of a mixing cup into which the matrix insert or plug is received.
Figure 13 is a cross-sectional view of the matrix insert or plug, and mixing cup, shown in Figure 6, and illustrating the tip of a pipette of a sample metering device forming part of an automated chemical analyzer being inserted into the mixing cup to deliver a liquid sample thereto.
Figure 14 is a cross-sectional view of the matrix insert or plug, the mixing cup and the pipette tip shown in Figure 13, and illustrating the pipette tip being fully received by a central bore formed axially through the matrix insert or plug, prior to the liquid sample in the pipette tip being expelled therefrom.
Figure 15 is a cross-sectional view of the matrix insert or plug, the mixing cup and the pipette tip in their relative positions shown in Figure 14, and illustrating the paths of flow of liquid sample into the matrix insert or plug after the liquid sample has been expelled from the pipette tip.
Figure 16 is a cross-sectional view of the matrix insert or plug, the mixing cup and the pipette tip in their relative positions shown in Figure 15, and illustrating the paths of flow of "clean" liquid sample from the matrix insert or plug as the liquid sample is being re-aspirated into the pipette tip.

### DETAILED DESCRIPTION OF THE PREFERRED EMBODIMENTS

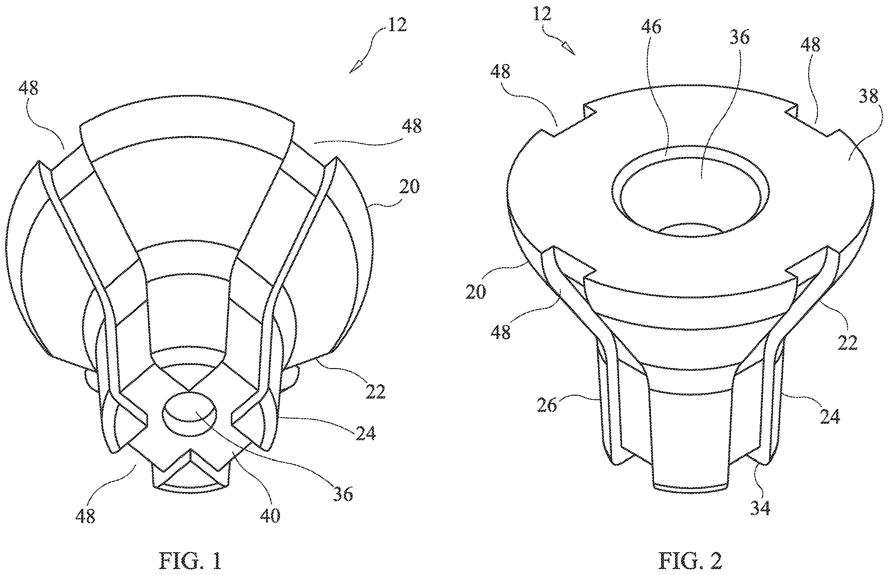

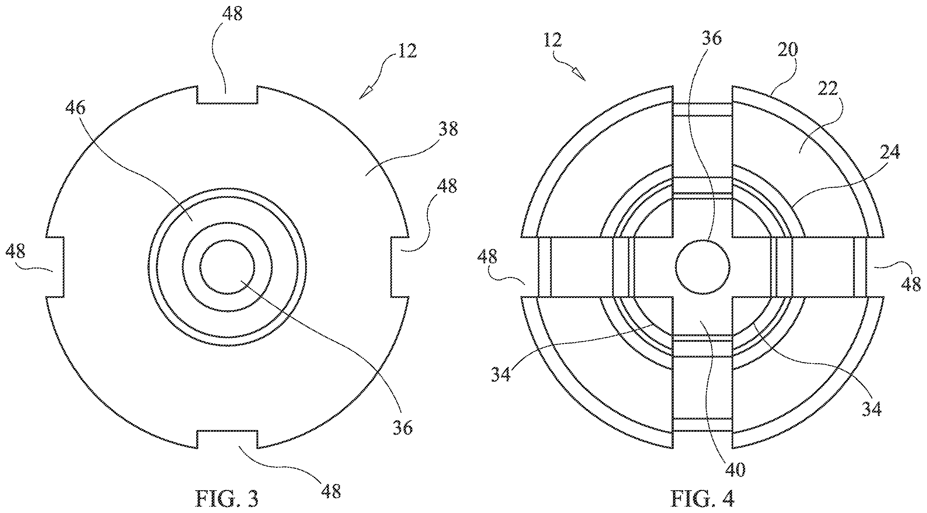

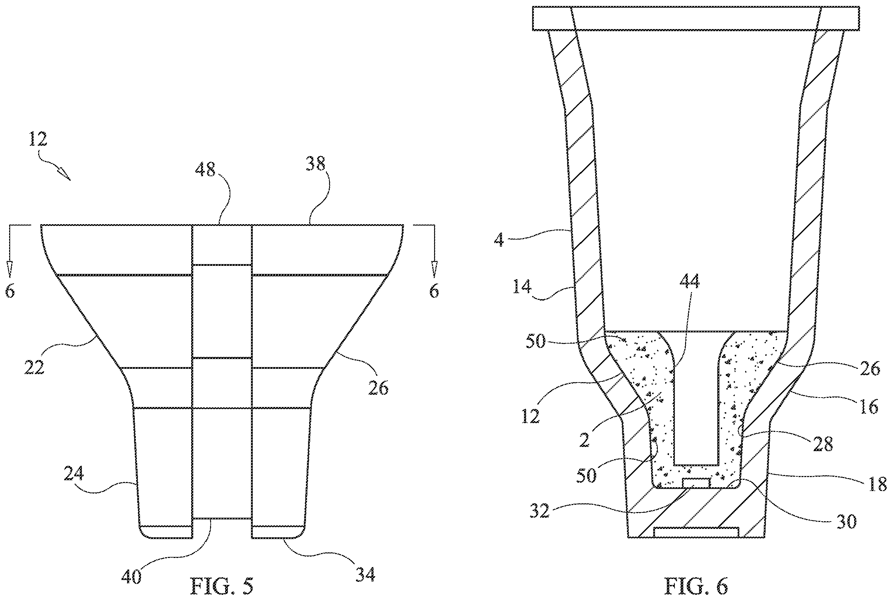

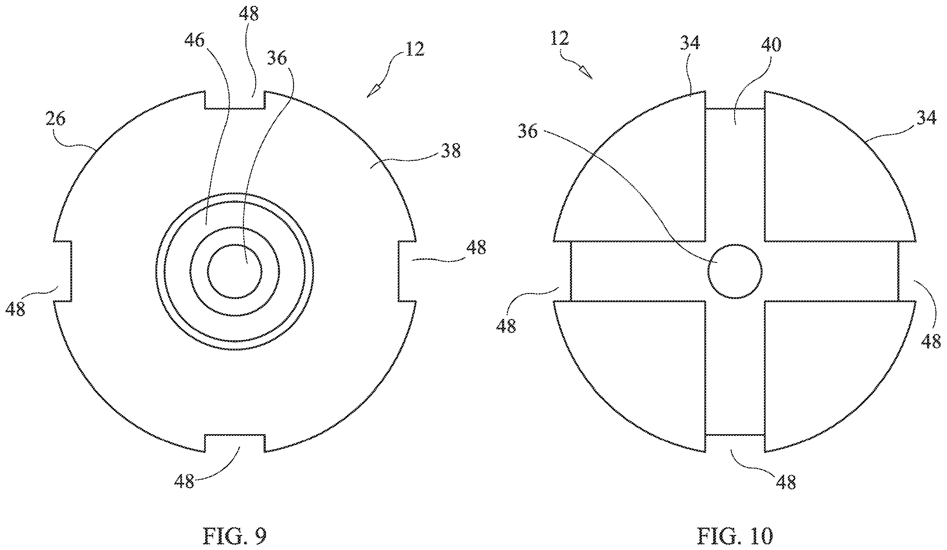

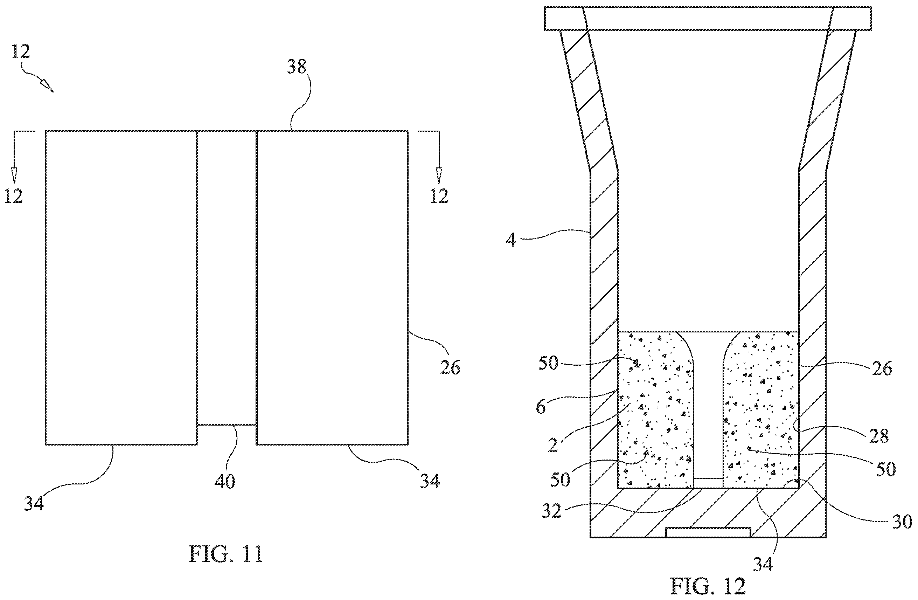

Figures 1-12 show various constructions of a matrix 2 in a mixing or reagent cup 4 formed in accordance with the present invention that together are used by an automated chemical analyzer to remove or lower the concentration of a targeted component of a liquid sample 6 prior to the liquid sample 6 being tested. As mentioned previously, the liquid sample 6 may be, but is not limited to, a "blood sample", as herein broadly defined as being whole blood, diluted blood, plasma, serum or the like, and the targeted component may be, but is not limited to, a component which may interfere with tests performed and measurements taken on a liquid sample 6 on a chemical analyzer, such as the component hemoglobin in bile acid assay tests performed by an automated chemical analyzer on a blood sample, such as described in the aforementioned IDEXX patent application, or an antigen, antibody, protein, analyte or some other constituent of a blood sample. By way of background, the automated chemical analyzer includes a sample metering device or sub-assembly having a pipette 8 on which is fitted a disposable pipette tip 10, the pipette 8 being connected to a pump (not shown) so that a liquid sample 6 may be aspirated into or expelled from the pipette tip 10.

In the aforementioned IDEXX patent application, the targeted component of the liquid sample adheres to the IMAC (Immobilized Metal Affinity Chromatography) porous beads in suspension with a liquid sample in a mixing cup, and the beads, with the component adhered thereto, settle by gravity to the bottom portion of the cup. A volume of the component-free liquid sample occupying the upper portion of the cup is aspirated by a pipette into the tip thereof for dispensing the sample onto a test slide. The method and devices disclosed in this present application differ from those described in the aforementioned application in that the IMAC beads, or other functionalized particles, are immobilized in a matrix 2 and do not enter into a suspension with the liquid, as will be explained in greater detail in the forthcoming paragraphs.

As shown in Figures 1-6, the matrix 2 is preferably formed as an insert or plug 12 that is shaped to conform closely to the interior shape of the mixing cup, sample cup, reagent cup or centrifuge cup 4 into which the matrix 2 is received. For example, the sample cup, reagent cup and mixing cup 4 used with the aforementioned Catalyst Dx^{®} and Catalyst One^{®} instruments sold by IDEXX Laboratories, Inc. have a generally frusto-conical shape, formed with a generally cylindrical upper portion 14, a tapered middle portion 16 and a generally cylindrical lower portion 18 having a smaller diameter than that of the upper portion 14. Thus, the matrix insert or plug 12 (hereinafter, the "matrix insert"), in the embodiments shown in Figures 1-6, has a similar, generally frusto-conical shape, with a generally cylindrical or circular upper portion 20, which leads to a tapered middle portion 22 of decreasing diameter, which in turn leads to a generally cylindrical lower portion 24 having a diameter that is less than that of the upper portion 20. The overall outer dimensions of the matrix insert 12 are chosen based on the interior dimensions of the cup 4 in which it is received so that the matrix insert 12 is closely received by and conforms to the interior shape of the cup 4, with the side walls 26 of the matrix insert 12 closely engaging at least portions of the side walls 28 of the cup 4. Such structure is to ensure that a liquid sample 6 added to the cup 4 will come in contact with the matrix insert 12 residing therein and will be drawn into the matrix 2 by capillary action or by hydraulic or pneumatic pressure caused by the pumping action of the pipette 8 rather than skirt around the outside of the matrix insert 12, as will be described in greater detail.

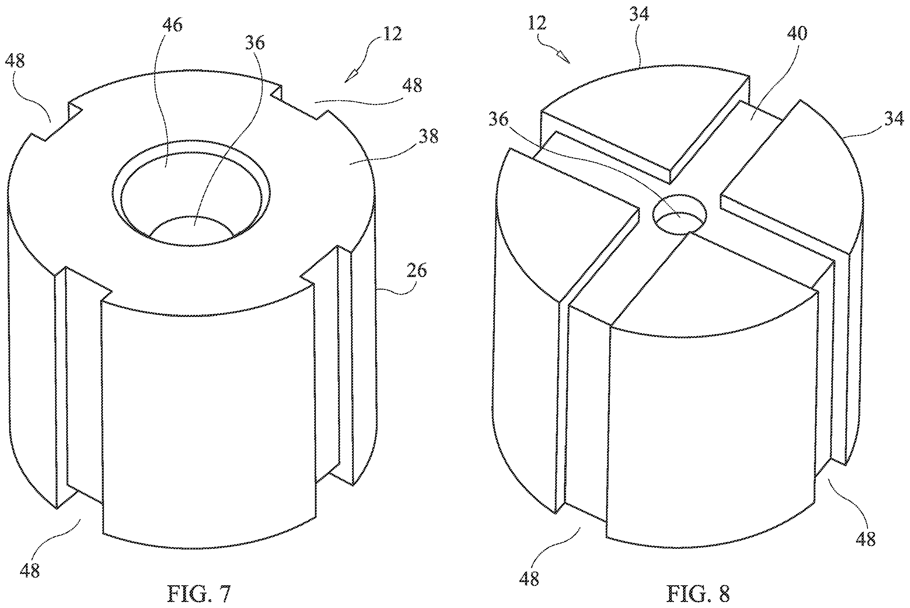

Alternatively, and as shown in Figures 7-12, the matrix insert 12 may take on a cylindrical shape for sample, reagent or mixing cups 4 having a generally cylindrical interior shape. Again, like the embodiment shown in Figures 1-6, the dimensions of the cylindrically-shaped matrix insert 12 are selected so that the outer side walls 26 thereof closely engage the inner side walls 28 of the cup 4 in which the matrix insert 12 is received.

In either embodiment of the matrix insert 12 described above and shown in Figures 1-12, the matrix insert 12 may be raised slightly from the interior bottom surface 30 of the cup 4 in which it is received to define with the bottom surface 30 a well or chamber 32 of a chosen volume to receive liquid sample 6 either gravitating through the matrix insert 12 or drawn by aspiration from the matrix insert 12 by the pipette 8 forming part of the sample metering sub-assembly of the chemical analyzer. The well or chamber 32 also provides a volume of space to receive the liquid sample 6 expelled by the pipette 8 from the tip 10 thereof. This will also be explained in the paragraphs that follow.

In one form of the matrix insert 12 shown in Figures 1-6, the well or chamber 32 may be formed by one or more standoffs 34, which are portions of the matrix insert 12 that extend outwardly and downwardly from the lower portion 24 of the matrix insert 12. The standoffs 34 raise the lower portion 24 of the matrix insert 12 above the interior bottom surface 30 of the cup 4 a predetermined distance to define the chamber or well 32 with a given volume.

The cylindrical matrix insert 12 shown in Figures 7-12 may also include one or more standoffs 34, such as shown in Figures 1-6, to define the chamber or well 32. However, it should be noted that, if the cylindrical matrix insert 12 is used in cylindrical cups 4 having a curved bottom, similar to a conventional test tube, rather than having a flat bottom, a standoff 34 may not be needed, since the curvature of the bottom of the cup 4 will maintain the matrix insert 12 above the bottom to define with the matrix insert 12 the liquid sample receiving well or chamber 32.

Alternatively, no standoffs 34 are required in either embodiment of the matrix insert 12 if the matrix insert 12 is secured in position within the cup 4 a given distance from the interior bottom surface 30 of the cup 4 to define with the cup 4 the liquid sample receiving well or chamber 32.

Preferably, and as shown in Figures 1-12, the matrix insert 12 is formed with a central bore 36 that extends axially through the thickness of the matrix insert 12, from the top surface 38 to the bottom surface 40 of the matrix insert 12. This bore 36 is preferably dimensioned in shape, length and diameter to conform to the outer shape of, and closely receive, the disposable tip 10 extending from the end of the pipette 8. Thus, when the pipette tip 10 is received by the central bore 36 formed in the matrix insert 12, it forms a seal therewith so that liquid sample 6 carried by the pipette tip 10 is expelled therefrom and into the liquid sample receiving well or chamber 32 located at the bottom of the cup 4. Furthermore, the seal formed between the pipette tip 10 and the matrix insert 12 when the tip 10 is received by the matrix bore 36 is desired to ensure there is sufficient reverse hydraulic or pneumatic pressure caused by aspiration by the pipette 8 to draw from the insert 12 component-free liquid sample 6 filling the matrix material of the insert 12. Alternatively, the central bore 36 of the matrix insert 12 may be formed with an oversized interior diameter so that a space 42 is defined between the pipette tip 10 and the interior walls 44 of the matrix insert 12 that define the bore 36 when the pipette tip 10 is received by the bore 32. This annular space 42 is provided so that, when the liquid sample 6 is expelled from the pipette tip 10 into the bottom of the cup 4 in which the matrix insert 12 resides, some of the liquid sample 6 will flow upwardly along the outer side walls of the pipette tip 10 within this space 42 and will come in contact with the interior walls 44 of the matrix insert 12 defining the bore 36 and will be drawn into the matrix 2 thereat by capillary action.

The bore 36 of the matrix insert 12 may be formed with an entry opening 46 having a funnel-like shape at the top surface 38 of the matrix insert 12, such as shown in Figures 1-12. The funnel-like shaped entry opening 46 helps direct the free end of the pipette tip 10 properly into the bore 36 of the matrix insert 12.

As is also shown in Figures 1-12, the matrix insert 12 may be formed with one channel, or a plurality of channels 48 periodically spaced from each other, and formed as longitudinally extending recesses in the side walls 26 of the matrix insert 12, about the circumference thereof. The channels 48 are in fluid communication with the liquid sample receiving well or chamber 32 situated between the matrix insert 12 and the interior bottom surface 30 of the cup 4. When liquid sample 6 is expelled from the pipette tip 10 into the well or chamber 32, some of the liquid sample 6 will flow into the channels 48, contained therein by the interior side walls 28 of the cup 4, and will be directed to the upper portion 20 of the matrix insert 12 or even the top surface 38 of the matrix insert 12, where it will be drawn into the matrix 2 by capillary action. The channels 48 are provided to help distribute the liquid sample 6 to the upper portion 20 of the matrix insert 12 and the matrix 2 thereat. The channels 48 may extend all the way along the longitudinal length of the matrix insert 12 to provide liquid sample 6 to the top surface 38 thereof, where the sample 6 will be drawn into the matrix 2 from the top surface 38 of the insert 12, or the channels 48 may terminate short of the top surface 38 so that the liquid sample 6 flowing therein will be drawn into the matrix 2 at the side walls 26 of the insert 12.

The matrix 2 is formed from a porous material which permits a liquid sample 6, be it whole blood, diluted blood, plasma, serum or other form of blood sample, or another type of fluid, to flow therethrough either by capillary action, centrifugation, or under the influence of pneumatic or hydraulic pressure. The porous material from which the matrix 2 is formed preferably possesses the ability to readily absorb or "wick" by capillary action a liquid sample 6 of a broad or finite viscosity or carrying particles or particulates of varying sizes, such as red or white blood cells, proteins (e.g., hemoglobin), leukocytes, granulocytes, and other types of particles suspended in a liquid, and have a porosity that allows the liquid to traverse the width and length of the matrix insert 12 with little or no "clogging". Furthermore, the matrix material should have the ability to act as a carrier for a reagent, for example, functionalized particles 50, such as porous or non-porous beads and nanoparticles, including IMAC agarose-based beads and silica-based beads, like those described in the aforementioned IDEXX patent application, and hold such functionalized particles 50 in an immobilized state without the particles 50 being released when wetted by the liquid sample 6.

Such matrix materials may include, but are not limited to, fibrous material composed of synthetic or natural fibers (e.g., glass or cellulose-based materials or thermoplastic polymers, such as, polyethylene, polypropylene, or polyester); sintered structures composed of particulate materials (e.g., glass or various thermoplastic polymers); or cast membrane films composed of nitrocellulose, nylon, polysulfone or the like (generally synthetic in nature). The porous matrix material may be composed of sintered, fine particles of polyethylene, commonly known as porous polyethylene, such as sintered polyethylene beads; preferably, such materials possess a density of between 0.35 and 0.55 grams per cubic centimeter, a pore size of between 5 and 40 microns, and a void volume of between 40 and 60 percent. Particulate polyethylene composed of cross-linked or ultra high molecular weight polyethylene is preferable. A flow flow matrix composed of porous polyethylene possesses all of the desirable features listed above, and in addition, is easily fabricated into various sizes and shapes. A particularly preferred material is 10-15 micron porous polyethylene from Chromex Corporation FN# 38-244-1 (Brooklyn, New York). Another preferred material is Fusion 5^{™} liquid flow matrix material available from Whatman, Inc., U.S.A., now Global Life Sciences Solutions USA LLC of Pittsburgh, Pennsylvania.

In one form, the porous matrix 2 may have an open pore structure with an average pore diameter of 1 to 250 micrometers and, in further aspects, about 3 to 100 micrometers, or about 10 to about 50 micrometers.

An example of a possible suitable porous material under consideration by the inventors herein and from which the matrix insert 12 may be formed and in which omni-directional flow occurs is a high density or ultra-high molecular weight polyethylene material manufactured by Porex Corporation of Fairburn, Georgia. This material is made from fusing spherical particles of ultra-high molecular weight polyethylene (UHMW-PE) by sintering. This creates a porous structure with an average pore size of eight to 20 microns, depending on the size of the particles (20 to 60 microns, respectively).

While matrices 2 made of polyethylene may be suitable for use, omni-directional flow materials formed of other olefin or other thermoplastic materials, e.g., polyvinyl chloride, polyvinyl acetate, copolymers of vinyl acetate and vinyl chloride, polyamide, polycarbonate, polystyrene, etc., may possibly be used. Examples of such materials include Magna Nylon Supported Membrane from GE Osmonics, Inc. (Minnetonka, Minnesota), Novylon Nylon Membrane from CUNO Inc., now 3M Purification Inc. (Meriden, Connecticut) and Durapore^{®} Membrane from Millipore Corporation (Billerica, Massachusetts), now Merck KGaA of Darmstadt, Germany.

Other porous materials that may be suitable for use in forming the matrix insert 12 include natural, synthetic, or naturally occurring or synthetically modified materials: papers (fibrous) or membranes (microporous) of cellulose materials such as paper, cellulose, and cellulose derivatives such as cellulose acetate and nitrocellulose, fiberglass, glass fiber, cloth, both naturally occurring (e.g., cotton) and synthetic (e.g., nylon); porous fibrous matrices; starch based materials, cross-linked dextran chains; ceramic materials; olefin or thermoplastic materials including those of polyvinyl chloride, polyethylene, polyvinyl acetate, polyamide, polycarbonate, polystyrene, copolymers of vinyl acetate and vinyl chloride and combinations of polyvinyl chloride-silica; and the like. This list is representative, and not meant to be limiting.

A least some of the porous materials for the fluid flow matrix set forth in U.S. Patent No. 5,726,010, for example, may be used in the formation of the matrix insert 12 of the present invention.

Alternatively, the porous matrix 2 itself may be formed of functionalized particles 50, such as the IMAC beads mentioned previously, that are bound together in an immobilized state.

The particles 50 that form the porous matrix insert 12, whether they are spherical or another shape, may be bound together by sintering and/or pressing, or by applying heat. For example, the matrix insert 12 may be formed in a sintering mold; more specifically, the matrix 2 is sintered and/or pressed in an offline form or mold and then inserted or pressed into the lower portion 18 of the cup 4.

Alternatively, the matrix insert 12 may be formed in situ, that is, within the cup 4, by partially filling the cup 4 with particle media, and then a die that forms the upper contour of the matrix insert 12 is brought down on top of the particle media, pressing the particles into the shape of the insert 12. The cup 4, particle media and die could then be heated to bond the particles to themselves and to the interior side walls 28 of the cup 4 to form the matrix insert 12 and to secure the insert 12 to the cup 4 at a desired position therein. As mentioned previously, the media particles, be they spherical or some other shape, that define the porous matrix insert, may have functionalized nanoparticles, IMAC beads or the like attached thereto in an immobilized state, or the media particles themselves may be functionalized so that a targeted component of a liquid sample 6 coming in contact with the matrix insert 12 will adhere directly to the functionalized media particles.

Another method envisioned to be used to form the matrix 2 is to use a binding or adhesive agent to form a polymer or copolymer bond or the like of particles in place of pressure and heat. The process of forming such bonds could be combined with a reagent coating process of the matrix 2 to add a reagent or other functionalized particles 50 to form and bond the particles 50 and immobilize the functionalized reagent to activate the porous matrix 2.

In yet another method of forming the matrix insert 12, raw liquid particle media, such as a thermoplastic resin, formed of functionalized particles 50 or carrying immobilized functionalized particles 50, may be injected into a mold and cured within or outside the mold, the result being the formation of a porous matrix insert 12 having a desired shape and which allows fluid flow therethrough.

In yet a further method of forming the matrix insert 12, the insert 12 may be formed by cutting into sections raw stock media that is porous and allows fluid flow therethrough, the sections being machined to have a particular shape and particular features, such as the standoffs 34, channels 48, central bore 36 and funnel-shaped entry port 46 leading to the bore 36, as shown in Figures 1-6, and to be able to fit into, and to conform to, the interior shape of the sample, reagent, mixing or centrifuge cup 4. For the cylindrical matrix insert 12 shown in Figures 7-12, a raw media stock in the form of a hollow tube of a given diameter may be cut to length in sections and also machined to provide any desired features, for example, the counterbored, funnel-shaped entry opening 46 that guides the pipette tip 10 towards and through the central bore 36 of the insert 12.

If the matrix insert 12 is formed externally to the cup 4, the matrix media may be coated with the desired reagent or other functionalized particles 50 prior to the insertion of the finished insert 12 into the cup 4 by spraying the coating on the matrix media, or using a dropper, where the coating of functionalized reagent or particles 50 is drawn into the matrix media by capillary action, or forced into the media by pneumatic or hydraulic pressure, immersion of the matrix media into a volume of liquid reagent, and then vacuum drying the functionalized reagent or particles 50 on the matrix media, or by using an ambient or elevated temperature drying process, or by lyophilization. Many, if not all, of these processes may be employed to coat the matrix media with the reagent or functionalized particles 50 in situ, that is, when the matrix media is already present in the cup 4.

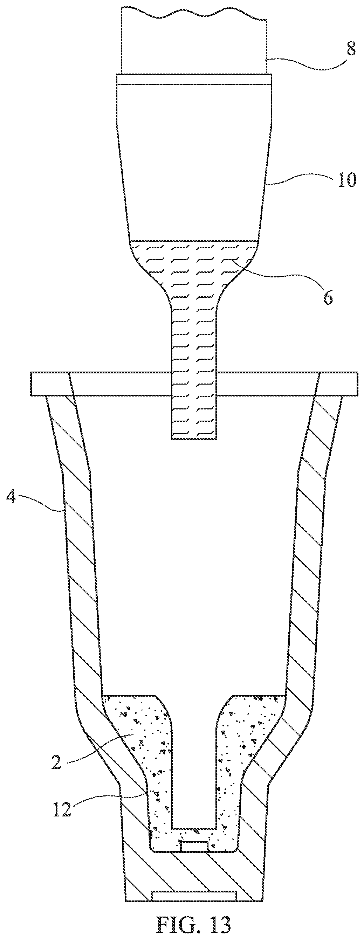

The matrix insert 12 formed in accordance with the present invention from functionalized particles 50 or carrying functionalized particles 50 in an immobilized state is used in the manner described below to treat, remove or at least lower the concentration of a component of a liquid sample 6, and reference should now be had to Figures 13-16 of the drawings.

In one example of using the matrix 2 of the present invention to remove a blood component, a predetermined volume (for example, 20 microliters) of whole blood or a blood component (e.g., plasma or serum) is aspirated from a sample cup (not shown) into a disposable tip 10 fitted on the end of a pipette 8 forming part of a sample metering device of an automated chemical analyzer. Then, a predetermined volume (for example, 20 microliters) of diluent or buffer solution from another cup (not shown) is aspirated into the pipette tip 10. (Alternatively, the blood sample and diluent or buffer solution may be premixed and aspirated into the pipette tip 10 from the sample cup.)

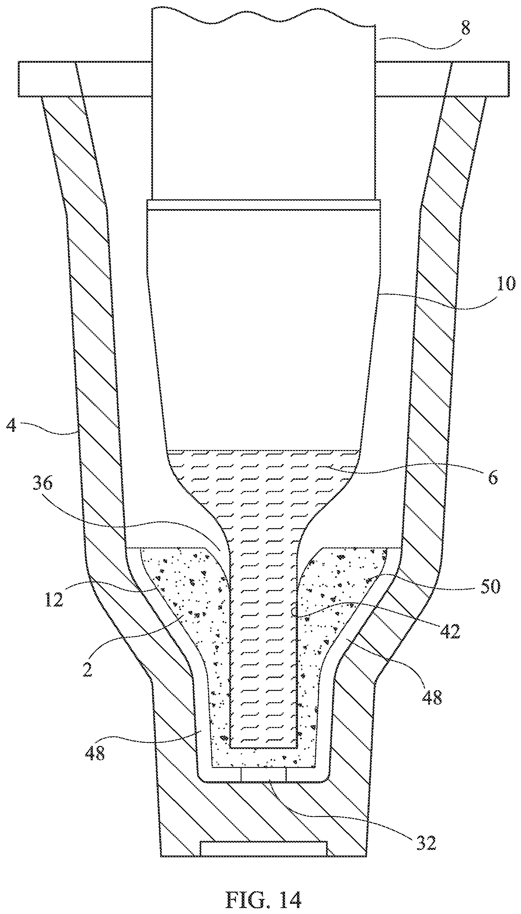

As shown in Figure 13, the pipette tip 10 containing the blood sample and diluent/buffer solution is lowered into a mixing or reagent cup 4 containing the functionalized matrix insert 12 formed in accordance with the present invention, until the tip 10 is fully or at least partially received by the central bore 36 formed in the matrix insert 12, as shown in Figure 14. In one form of the invention, the pipette tip 10 forms a seal with the insert 12 at the top surface 38 and at the inner side walls 44 thereof defining the bore 36. In another form of invention, no complete seal is formed between the pipette tip 10 and the matrix insert 12 so that fluid (e.g., the blood sample and diluent/buffer solution) may flow in the annular space 42 between the pipette tip 10 and the matrix insert 12 to the top surface 38 of the insert 12.

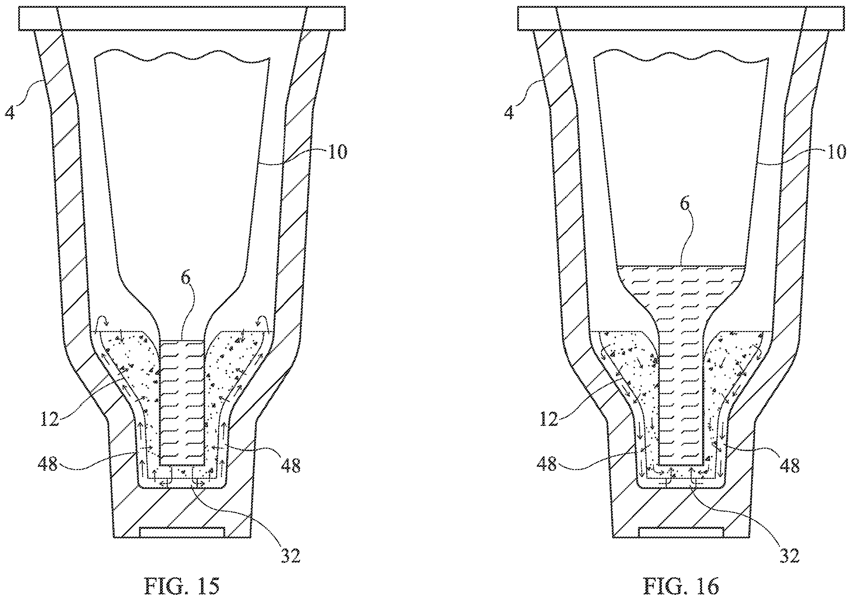

Now, and as shown in Figure 15, the pump action of the pipette 8 is reversed to expel the 40 microliters of blood sample and diluent/buffer solution from the pipette tip 10 into the bottom of the cup 4 (that is, into the liquid sample receiving well or chamber 32, if such is provided) such that the blood sample and diluent/buffer solution will come in contact with the matrix insert 12. The blood sample and diluent/buffer solution will be drawn into the matrix 2 of the insert 12 by capillary action or under the force of hydraulic or pneumatic pressure caused by the pumping action of the pipette 8 where the blood sample and diluent/buffer solution will be exposed to the functionalized particles 50 carried by or forming the matrix 2 of the insert 12.

It should be noted that the blood and diluent/buffer solution not only comes in contact with the matrix 2 at the bottom surface 40 of the insert 12, but also on the lateral sides 26, inner bore wall 44 and top surface 38 thereof as it travels in a reverse flow up the side channels 48 and bore space 42 of the insert 12. The blood sample and diluent/buffer solution will flow into and through the porous matrix insert 12 where the targeted component of the sample, be it hemoglobin or some other protein or cell type, will adhere to the immobilized functionalized particles 50 of the matrix 2 and will similarly become immobilized within the confines of the matrix insert 12. It should be further noted that, if the blood sample is not premixed with the diluent/buffer solution prior to its being added to the matrix insert 12, the flow of the blood sample and diluent/buffer solution into and through the matrix 2 will cause the blood sample and diluent/buffer solution to mix. More specifically, the matrix 2 due to its porosity simultaneously causes turbulence mixing of the blood sample and the diluent/buffer solution as well as bringing about a reaction of the blood sample with the functionalized particles 50.

Now, and as shown in Figure 16, with the pipette tip 10 still in place within the bore 36 of the insert 12, the pump action of the pipette 8 is reversed so that the mixed solution of blood and diluent/buffer, free of the targeted component or having a reduced concentration thereof, is drawn from the matrix 2 of the insert 12 and re-aspirated into the tip 10, most likely along with some air or perhaps bubbles of air. Aspirating air bubbles should not be a problem since the preferred diluent/buffer solution contains an anti-foaming component that dissipates the bubbles; furthermore, the air helps to mix the blood sample and diluent/buffer solution together.

It should be realized that the matrix 2 of the insert 12 may carry or be formed of a high concentration of immobilized functionalized particles 50, more so then when using functionalized particles in solution, as disclosed in the aforementioned IDEXX patent application that teaches a method of removing an interfering component of a liquid sample. Therefore, by using the matrix 2 of the present invention having immobilized functionalized particles 50, it is possible to remove most, if not all, of the targeted component of the liquid sample 6 with a single pass of the liquid sample 6 through the matrix 2. Another advantage of using the functionalized matrix 2 of the present invention is that there is no time required for component-adhering particles to settle by gravity in the liquid sample 6, a step performed in the method disclosed in the aforementioned IDEXX patent application.

In any event, the blood or liquid sample 6 may be passed through the matrix 2 of the insert 12 several times, if needed, by a sequence of expelling the liquid sample 6 and any aspirated air from the pipette tip 10 into the bottom of the cup 4 and re-aspirating the liquid sample 6 drawn from the matrix insert 12 into the tip 10, until substantially all of the targeted component is removed from the liquid sample 6 by its adhering to the functionalized particles 50 of the matrix 2. The final aspiration step in this process will draw as much of the liquid sample 6 out of the matrix 2 as possible, but it is envisioned to be within the scope of the present invention to apply a centripetal force (i.e., centrifugation) to the cup 4 having the insert 12 to help pull the targeted component-free liquid sample 6 from the interstices of the matrix 2. The "clean" liquid sample 6 may now be deposited on a chemical reagent test slide or a sample holding cuvette for testing by an automated chemical analyzer.

Thus, the matrix 2 of the present invention, in the form of an insert 12, acts essentially as a filter or two-directional flow column to remove a targeted component of a liquid sample 6. The matrix 2 itself could be formed of functionalized beads or particles 50, or may be, in another form, formed of micro beads that are used to immobilize functionalized nano beads. The matrix 2 is porous and allows a liquid sample 6 to flow through it.

In another form of the present invention, the insert 12 may be formed from a stack of doughnut-shaped layers of matrix impregnated with functionalized particles 50, the doughnut holes being aligned to define the central bore 36 through the insert 12.

In yet another form of the present invention, the matrix 2 of the insert 12 may be made thicker in the general area between the bottom of the central bore 36 and the bottom surface 40 of the insert 12 above the liquid sample receiving chamber 32 defined by the standoffs 34. It is believed that with the construction described above, the insert 12 may generate better fluid flow through the matrix 2.

Although it is primarily described herein that the insert 12 is placed in a mixing cup 4 used by an automated chemical analyzer, it is envisioned to place the insert 12 in a sample cup, reagent cup, centrifuge cup or any other type of cup or liquid holding vessel that may be used to remove a targeted component of the liquid sample 6 or reduce the concentration thereof in the liquid sample 6, and it should be understood that the term "mixing cup" 4 used herein and in the claims should be interpreted to include all of the aforementioned cups and vessels.

Although illustrative embodiments of the present invention have been described herein with reference to the accompanying drawings, it is to be understood that the invention is not limited to those precise embodiments, and that various other changes and modifications may be effected therein by one skilled in the art without departing from the scope of the invention as defined in the appended claims.

## Claims

1. An insert (12) mounted or insertable in a mixing cup (4) and used by an automated chemical analyzer for removing a targeted component of a liquid sample (6), the automated chemical analyzer including a sample metering device having a pipette (8) fitted with a disposable pipette tip (10) and a pump operatively connected to the pipette (8) for aspirating the liquid sample (6) into the pipette tip (10) and expelling the liquid sample (6) therefrom, the insert (12) comprising:
a porous matrix (2) formed of or carrying in an immobilized state bead-based immobilized functionalized particles (50) having properties such that the targeted component of the liquid sample (6) adheres to the bead-based immobilized functionalized particles (50), the porous matrix (2) having a predetermined porosity that allows the liquid sample (6) to flow therethrough;
wherein, when the liquid sample (6) is expelled from the pipette tip (10), the liquid sample (6) is drawn into the matrix (2) of the insert (12) by capillary action or forced into the matrix (2) by positive hydraulic or pneumatic pressure exerted thereon by the pump of the sample metering device, whereupon the targeted component of the liquid sample (6) adheres to the bead-based immobilized functionalized particles (50) of the matrix (2); and
wherein, under negative hydraulic or pneumatic pressure exerted on the liquid sample (6) within the matrix (2) by the pump of the sample metering device, liquid sample (6) free of the targeted component or having a reduced concentration thereof is drawn from the matrix (2) of the insert (12) and aspirated into the pipette tip (10) for subsequent testing by the automated chemical analyzer.

2. An insert (12) as defined by Claim 1, wherein the insert (12) has one or more side walls (26), a top wall (38) and a bottom wall (40) disposed opposite the top wall (38), the one or more side walls (26) extending between the top wall (38) and the bottom wall (40); and
wherein the insert (12) has formed in the one or more side walls (26) one or more liquid flow channels (48), the one or more liquid flow channels (48) extending longitudinally along at least a portion of the one or more side walls (26), the one or more channels (48) being in fluid communication with the matrix (2) of the insert (12).

3. An insert (12) as defined by Claim 1, wherein the insert (12) has one or more side walls (26), a top wall (38) and a bottom wall (40) disposed opposite the top wall (38), the one or more side walls (26) extending between the top wall (38) and the bottom wall (40); and
wherein the insert (12) has formed axially therein a central bore (36), the central bore (36) passing through the insert (12) from the top wall (38) thereof to the bottom wall (40) thereof, the central bore (36) being dimensioned to at least partially receive the pipette tip (10) of the sample metering device.

4. An insert (12) as defined by Claim 3, wherein the top wall (38) of the insert (12) has formed therein a funnel-shaped entry port (46), the funnel-shaped entry port (46) being in alignment and fluid communication with the central bore (36).

5. An insert (12) as defined by Claim 1, wherein the insert (12) has one or more side walls (26), a top wall (38) and a bottom wall (40) disposed opposite the top wall (38), the one or more side walls (26) extending between the top wall (38) and the bottom wall (40); and
wherein the insert (12) includes at least one standoff (34), the at least one standoff (34) extending outwardly from the bottom wall (40) of the insert (12) a predetermined distance, the at least one standoff (34) helping to define between the bottom wall (40) of the insert (12) and the mixing cup (4) a chamber (32) for receiving the liquid sample (6) when the insert (12) is received by the mixing cup (4).

6. An insert (12) as defined by Claim 1, wherein the insert (12) has one or more side walls (26), a top wall (38) and a bottom wall (40) disposed opposite the top wall (38), the one or more side walls (26) extending between the top wall (38) and the bottom wall (40); and
wherein the insert (12) is formed with 1) a generally cylindrical shape; or 2) a generally frusto-conical shape and includes a generally circular upper portion (20) having a first diameter and situated at or near the top wall (38) thereof, a tapered middle portion (22) of decreasing diameter, extending from the upper portion (20), and a generally cylindrical lower portion (24) extending from the middle portion (22) and situated at or near the bottom wall (40) thereof, the lower portion (24) having a second diameter which is less than the first diameter of the upper portion (20).

7. An insert (12) as defined by Claim 1, wherein the matrix (2) of the insert (12) is formed of a medium which holds in an immobilized state the bead-based immobilized functionalized particles (50), such as nanobeads, or IMAC (Immobilized Metal Affinity Chromatography) beads, or agarose-based beads, or silica-based beads.

8. An insert (12) as defined by Claim 1, wherein the matrix (2) of the insert (12) is formed of the bead-based immobilized functionalized particles (50), such as nanobeads, or IMAC (Immobilized Metal Affinity Chromatography) beads, or agarose-based beads, or silica-based beads.

9. An insert (12) as defined by Claim 1, wherein the matrix (2) is formed from a glass fiber-based material that contains a plastic binder.

10. An insert (12) as defined by Claim 1, wherein the matrix (2) is formed from a porous material selected from the group consisting of: natural, synthetic, or naturally occurring or synthetically modified materials; fibrous materials; membranes of cellulose materials, including paper, cellulose, and cellulose derivatives, including cellulose acetate and nitrocellulose, fiberglass, glass fiber, cloth, both naturally occurring, including cotton, and synthetic, including nylon; porous gels, including silica gel, agarose, dextran and gelatin; porous fibrous matrices; starch based materials; cross-linked dextran chains; ceramic materials; olefin and thermoplastic materials, including films of polyvinyl chloride, polyethylene, polyvinyl acetate, polyamide, polycarbonate, polystyrene, copolymers of vinyl acetate and vinyl chloride and combinations of polyvinyl chloride-silica.

11. An insert (12) as defined by Claim 1, wherein the matrix (2) is selected from the group of materials consisting of: sintered polyethylene beads; nitrocellulose; glass fibers; and paper.

12. A method using an automated chemical analyzer for removing a targeted component of a liquid sample (6), the automated chemical analyzer including a sample cup, and a sample metering device having a pipette (8) fitted with a disposable pipette tip (10) and a pump operatively connected to the pipette (8) for aspirating the liquid sample (6) into the pipette tip (10) and expelling the liquid sample (6) therefrom, the method comprising the steps of:
aspirating into the pipette tip (10) a volume of the liquid sample (6) contained in the sample cup;
positioning the pipette tip (10) containing the volume of the liquid sample (6) over a mixing cup (4), the mixing cup (4) defining an interior cavity for receiving the liquid sample (6) and having an interior bottom surface (30), the mixing cup (4) further having an insert (12) mounted within the interior cavity thereof, wherein the insert (12) includes a porous matrix (2) formed of or carrying in an immobilized state bead-based immobilized functionalized particles (50) having properties such that the targeted component of the liquid sample (6) adheres to the bead-based immobilized functionalized particles (50), the porous matrix (2) having a predetermined porosity that allows the liquid sample (6) to flow therethrough, the insert (12) further having one or more side walls (26), a top wall (38) and a bottom wall (40) disposed opposite the top wall (38), the one or more side walls (26) extending between the top wall (38) and the bottom wall (40), the insert (12) having formed axially therein a central bore (36), the central bore (36) passing through the insert (12) from the top wall (38) thereof to the bottom wall (40) thereof, the central bore (36) being dimensioned to at least partially receive the pipette tip (10) of the sample metering device;
lowering the pipette tip (10) into the mixing cup (4) such that the pipette tip (10) is at least partially received by the central bore (36) of the insert (12) disposed within the mixing cup (4);
expelling the volume of liquid sample (6) from the pipette tip (10) into the insert (12), wherein the liquid sample (6) expelled from the pipette tip (10) is drawn into the matrix (2) of the insert (12) by capillary action or forced into the matrix (2) by positive hydraulic or pneumatic pressure exerted thereon by the pump of the sample metering device, whereupon the targeted component of the liquid sample (6) adheres to the bead-based immobilized functionalized particles (50) of the matrix (2); and
applying, using the pipette tip (10) in the at least partially received position within the central bore (36) of the insert (12), a negative hydraulic or pneumatic pressure on the liquid sample (6) within the matrix (2) by the pump of the sample metering device, whereby liquid sample (6) free of the targeted component or having a reduced concentration thereof is drawn from the matrix (2) of the insert (12) and aspirated into the pipette tip (10) for subsequent testing by the automated chemical analyzer.

13. A method as defined by Claim 12, which further comprises the steps of:
expelling from the pipette tip (10) into the insert (12) for at least a second time the liquid sample (6) drawn from the matrix (2) of the insert (12) and aspirated into the pipette tip (10), whereby the expelled liquid sample (6) flows into the matrix (2) of the insert (12) for at least a second time; and
applying, using the pipette tip (10) in the at least partially received position within the central bore (36) of the insert (12), for at least a second time a negative hydraulic or pneumatic pressure on the liquid sample (6) within the matrix (2) by the pump of the sample metering device, whereby liquid sample (6) free of the targeted component or having a reduced concentration thereof is drawn from the matrix (2) of the insert (12) for at least a second time and re-aspirated into the pipette tip (10).

14. A method as defined by Claim 12, wherein the insert (12) has formed in the one or more side walls (26) one or more liquid flow channels (48), the one or more liquid flow channels (48) extending longitudinally along at least a portion of the one or more side walls (26), the one or more channels (48) being in fluid communication with the matrix (2) of the insert (12); and
wherein the step of expelling the volume of liquid sample (6) from the pipette tip (10) into the insert (12) includes the sub-step of forcing the liquid sample (6) expelled from the pipette tip (10) into the one or more liquid flow channels (48).

15. A method as defined by Claim 12, wherein the insert (12) is positioned within the interior cavity of the mixing cup (4) such that the bottom wall (40) of the insert (12) is spaced from the interior bottom surface (30) of the mixing cup (4) to define therewith a chamber (32) for receiving the liquid sample (6); and
wherein the step of expelling the volume of liquid sample (6) from the pipette tip (10) into the insert (12) includes the sub-step of forcing the liquid sample (6) expelled from the pipette tip (10) into the liquid sample receiving chamber (32).

16. A method as defined by Claim 12, wherein the step of lowering the pipette tip (10) into the mixing cup (4) such that the pipette tip (10) is at least partially received by the central bore (36) of the insert (12) includes the sub-step of forming a substantially liquidtight seal between the pipette tip (10) and an inner wall (44) of the insert (12) that defines the central bore (36) thereof.

17. A method as defined by Claim 12, wherein the central bore (36) of the insert (12) is dimensioned to provide an annular space (42) between at least a portion of an inner wall (44) of the insert (12) defining the central bore (36) and at least a portion of the pipette tip (10) when the pipette tip (10) is at least partially received by the central bore (36) of the insert (12), the annular space (42) being in fluid communication with the matrix (2) of the insert (12); and
wherein the step of expelling the volume of liquid sample (6) from the pipette tip (10) into the insert (12) includes the sub-step of forcing the liquid sample (6) expelled from the pipette tip (10) into the annular space (42).

## Patentansprüche

1. Einsatz (12), der in einem Mischbecher (4) montiert oder darin einsetzbar ist und von einem automatisierten chemischen Analysator zum Entfernen einer Zielkomponente einer flüssigen Probe (6) verwendet wird, wobei der automatisierte chemische Analysator eine Probendosiervorrichtung, die eine Pipette (8) aufweist, die mit einer Einwegpipettenspitze (10) ausgestattet ist, und eine Pumpe, die funktionsfähig mit der Pipette (8) verbunden ist, zum Ansaugen der flüssigen Probe (6) in die Pipettenspitze (10) und zum Ausstoßen der flüssigen Probe (6) daraus, beinhaltet, der Einsatz (12) umfassend:
eine poröse Matrix (2), die aus auf Kügelchen basierenden, immobilisierten, funktionalisierten Partikeln (50) gebildet ist oder diese in immobilisiertem Zustand trägt, die Eigenschaften aufweisen, sodass die Zielkomponente der flüssigen Probe (6) an den auf Kügelchen basierenden, immobilisierten, funktionalisierten Partikeln (50) anhaftet, wobei die poröse Matrix (2) eine vorbestimmte Porosität aufweist, die ermöglicht, dass die Flüssigkeitsprobe (6), durch sie hindurch fließt;
wobei, wenn die Flüssigkeitsprobe (6) aus der Pipettenspitze (10) ausgestoßen wird, die Flüssigkeitsprobe (6) durch Kapillarwirkung in die Matrix (2) des Einsatzes (12) gesaugt oder durch einen positiven hydraulischen oder pneumatischen Druck, der von der Pumpe der Probendosiervorrichtung darauf ausgeübt wird, in die Matrix (2) gedrückt wird, woraufhin die Zielkomponente der Flüssigkeitsprobe (6) an den auf Kügelchen basierenden, immobilisierten, funktionalisierten Partikeln (50) der Matrix (2) anhaftet; und
wobei unter Einwirkung eines negativen hydraulischen oder pneumatischen Drucks, der durch die Pumpe der Probendosiervorrichtung auf die Flüssigkeitsprobe (6) innerhalb der Matrix (2) ausgeübt wird, Flüssigkeitsprobe (6), die frei von der Zielkomponente ist oder eine verringerte Konzentration davon aufweist, aus der Matrix (2) des Einsatzes (12) entnommen und in die Pipettenspitze (10) angesaugt wird, um anschließend von dem automatisierten chemischen Analysator untersucht zu werden.

2. Einsatz (12) nach Anspruch 1, wobei der Einsatz (12) eine oder mehrere Seitenwände (26), eine obere Wand (38) und eine untere Wand (40), die gegenüber der oberen Wand (38) angeordnet ist, aufweist, wobei sich die eine oder die mehreren Seitenwände (26) zwischen der oberen Wand (38) und der unteren Wand (40) erstrecken; und
wobei in dem Einsatz (12) in der einen oder den mehreren Seitenwänden (26) ein oder mehrere Flüssigkeitsströmungskanäle (48) gebildet sind, sich der eine oder die mehreren Flüssigkeitsströmungskanäle (48) in Längsrichtung entlang mindestens eines Abschnitts der einen oder der mehreren Seitenwände (26) erstrecken, der eine oder die mehreren Kanäle (48) in Fluidverbindung mit der Matrix (2) des Einsatzes (12) sind.

3. Einsatz (12) nach Anspruch 1, wobei der Einsatz (12) eine oder mehrere Seitenwände (26), eine obere Wand (38) und eine der obere Wand (38) gegenüberliegende untere Wand (40) aufweist, wobei sich die eine oder die mehreren Seitenwände (26) zwischen der oberen Wand (38) und der unteren Wand (40) erstrecken; und
wobei in dem Einsatz (12) axial eine mittlere Bohrung (36) gebildet ist, die mittlere Bohrung (36) von einer oberen Wand (38) davon bis zu der unteren Wand (40) davon durch den Einsatz (12) verläuft, wobei die mittlere Bohrung (36) dimensioniert ist, um die Pipettenspitze (10) der Probendosiervorrichtung zumindest teilweise aufzunehmen.

4. Einsatz (12) nach Anspruch 3, wobei in der oberen Wand (38) des Einsatzes (12) eine trichterförmige Eintrittsöffnung (46) gebildet ist, wobei die trichterförmige Eintrittsöffnung (46) mit der mittleren Bohrung (36) ausgerichtet und in Fluidverbindung damit ist.

5. Einsatz (12) nach Anspruch 1, wobei der Einsatz (12) eine oder mehrere Seitenwände (26), eine obere Wand (38) und eine der obere Wand (38) gegenüberliegende untere Wand (40) aufweist, wobei sich die eine oder die mehreren Seitenwände (26) zwischen der oberen Wand (38) und der unteren Wand (40) erstrecken; und
wobei der Einsatz (12) mindestens einen Abstandhalter (34) beinhaltet, wobei sich der mindestens eine Abstandhalter (34) um einen vorbestimmten Abstand von der unteren Wand (40) des Einsatzes (12) nach außen erstreckt, wobei der mindestens eine Abstandhalter (34) dazu beiträgt, zwischen der unteren Wand (40) des Einsatzes (12) und dem Mischbecher (4) eine Kammer (32) zum Aufnehmen der Flüssigkeitsprobe (6) zu bilden, wenn der Einsatz (12) in dem Mischbecher (4) aufgenommen ist.

6. Einsatz (12) nach Anspruch 1, wobei der Einsatz (12) eine oder mehrere Seitenwände (26), eine obere Wand (38) und eine der obere Wand (38) gegenüberliegende untere Wand (40) aufweist, wobei sich die eine oder die mehreren Seitenwände (26) zwischen der oberen Wand (38) und der unteren Wand (40) erstrecken; und
wobei der Einsatz (12) mit 1) einer generell zylindrischen Form oder 2) einer generell kegelstumpfförmigen Form gebildet ist und einen generell kreisförmigen oberen Abschnitt (20), der einen ersten Durchmesser aufweist und sich an oder nahe der oberen Wand (38) befindet, einen sich verjüngenden mittleren Abschnitt (22) mit abnehmendem Durchmesser, der sich von dem oberen Abschnitt (20) aus erstreckt, und einen generell zylindrischen unteren Abschnitt (24), der sich von dem mittleren Abschnitt (22) aus erstreckt und sich an oder nahe der unteren Wand (40) davon befindet, wobei der untere Abschnitt (24) einen zweiten Durchmesser aufweist, der kleiner ist als der erste Durchmesser des oberen Abschnitts (20), beinhaltet.

7. Einsatz (12) nach Anspruch 1, wobei die Matrix (2) des Einsatzes (12) aus einem Medium gebildet ist, das die auf Kügelchen basierenden, immobilisierten, funktionalisierten Partikel (50) in einem immobilisierten Zustand hält, wie beispielsweise Nanokügelchen, IMAC-Kügelchen (Immobilized Metal Affinity Chromatography) oder Kügelchen auf Agarose- oder Siliziumdioxidbasis.

8. Einsatz (12) nach Anspruch 1, wobei die Matrix (2) des Einsatzes (12) aus den auf Kügelchen basierenden, immobilisierten, funktionalisierten Partikel (50) gebildet ist, wie beispielsweise Nanokügelchen, IMAC-Kügelchen (Immobilized Metal Affinity Chromatography) oder Kügelchen auf Agarose- oder Siliziumdioxidbasis.

9. Einsatz (12) nach Anspruch 1, wobei die Matrix (2) aus einem Material auf Glasfaserbasis gebildet ist, das ein Kunststoffbindemittel enthält.

10. Einsatz (12) nach Anspruch 1, wobei die Matrix (2) aus einem porösen Material gebildet ist, das ausgewählt ist aus der Gruppe, bestehend aus: natürlichen, synthetischen oder natürlich vorkommenden oder synthetisch modifizierten Materialien; Fasermaterialien; Membranen aus Zellulosematerialien, einschließlich Papier, Zellulose und Zellulosederivaten, wie beispielsweise Zelluloseacetat und Nitrocellulose, Glasfaser, Glasfasergewebe, sowohl natürlich vorkommende, einschließlich Baumwolle, als auch synthetische, einschließlich Nylon; poröse Gele, einschließlich Silikagel, Agarose, Dextran und Gelatine; poröse Fasermatrizen; Materialien auf Stärkebasis; vernetzte Dextranketten; keramische Materialien; Olefin- und thermoplastische Materialien, einschließlich Folien aus Polyvinylchlorid, Polyethylen, Polyvinylacetat, Polyamid, Polycarbonat, Polystyrol, Copolymeren aus Vinylacetat und Vinylchlorid, sowie Kombinationen aus Polyvinylchlorid und Siliziumdioxid.

11. Einsatz (12) nach Anspruch 1, wobei die Matrix (2) ausgewählt ist aus der Gruppe von Materialien, bestehend aus gesinterten Polyethylenkügelchen, Nitrocellulose, Glasfasern und Papier.

12. Verfahren unter Verwendung eines automatisierten chemischen Analysegeräts zum Entfernen einer Zielkomponente aus einer flüssigen Probe (6), wobei das automatisierte chemische Analysegerät einen Probenbecher und eine Probendosiervorrichtung, die eine mit einer Einwegpipettenspitze (10) ausgestattete Pipette (8) sowie eine funktionsfähig mit der Pipette (8) verbundene Pumpe zum Ansaugen der Flüssigkeitsprobe (6) in die Pipettenspitze (10) und zum Ausstoßen der Flüssigkeitsprobe (6) daraus, beinhaltet, das Verfahren umfassend die folgenden Schritte:
Ansaugen eines Volumens der in dem Probenbecher enthaltenen flüssigen Probe (6) in die Pipettenspitze (10);
Positionieren der Pipettenspitze (10), die das Volumen der Flüssigkeitsprobe (6) enthält, über einem Mischbecher (4), wobei der Mischbecher (4) einen Innenhohlraum zum Aufnehmen der Flüssigkeitsprobe (6) bildet und eine innere Bodenfläche (30) aufweist, wobei der Mischbecher (4) ferner einen Einsatz (12) aufweist, der in dem Innenraum davon montiert ist, wobei der Einsatz (12) eine poröse Matrix (2) beinhaltet, die aus auf Kügelchen basierenden, immobilisierten, funktionalisierten Partikeln (50) gebildet ist oder diese in einem immobilisierten Zustand trägt, die Eigenschaften aufweisen, sodass die Zielkomponente der flüssigen Probe (6) an den auf Kügelchen basierenden, immobilisierten, funktionalisierten Partikeln (50) anhaftet, wobei die poröse Matrix (2) eine vorbestimmte Porosität aufweist, die es ermöglicht, dass die flüssige Probe (6) durch sie hindurch fließt, wobei der Einsatz (12) ferner eine oder mehrere Seitenwände (26), eine obere Wand (38) und eine untere Wand (40), die gegenüber der oberen Wand (38) angeordnet ist, aufweist, sich die eine oder die mehreren Seitenwände (26) zwischen der oberen Wand (38) und der unteren Wand (40) erstrecken, wobei in dem Einsatz (12) axial eine mittlere Bohrung (36) gebildet ist, wobei die mittlere Bohrung (36) von der oberen Wand (38) davon zu der unteren Wand (40) davon durch den Einsatz (12) verläuft, wobei die mittlere Bohrung (36) dimensioniert ist, um die Pipettenspitze (10) der Probendosiervorrichtung zumindest teilweise aufzunehmen;
Absenken der Pipettenspitze (10) in den Mischbecher (4), sodass die Pipettenspitze (10) zumindest teilweise von der mittleren Bohrung (36) des in Mischbecher (4) angeordneten Einsatzes (12) aufgenommen ist;
Ausstoßen des Volumens der flüssigen Probe (6) aus der Pipettenspitze (10) in den Einsatz (12), wobei die aus der Pipettenspitze (10) ausgestoßene flüssige Probe (6) durch Kapillarwirkung in die Matrix (2) des Einsatzes (12) gesaugt oder durch einen von der Pumpe der Probendosiervorrichtung auf die Matrix (2) ausgeübten hydraulischen oder pneumatischen Überdruck in diese gedrückt wird, woraufhin die Zielkomponente der Flüssigkeitsprobe (6) an den auf Kügelchen basierenden, immobilisierten, funktionalisierten Partikeln (50) der Matrix (2) anhaftet; und
Ausüben, unter Verwendung der Pipettenspitze (10) in der zumindest teilweise aufgenommenen Position innerhalb der mittleren Bohrung (36) des Einsatzes (12), eines negativen hydraulischen oder pneumatischen Drucks auf die Flüssigkeitsprobe (6) innerhalb der Matrix (2) durch die Pumpe der Probendosiervorrichtung, wodurch Flüssigkeitsprobe (6), die frei von der Zielkomponente ist oder eine verringerte Konzentration davon aufweist, aus der Matrix (2) des Einsatzes (12) entnommen und zur anschließenden Untersuchung durch den automatisierten chemischen Analysator in die Pipettenspitze (10) gesaugt wird.

13. Verfahren nach Anspruch 12, das ferner die folgenden Schritte umfasst:
Ausstoßen, aus der Pipettenspitze (10) in den Einsatz (12) mindestens ein zweites Mal, der Flüssigkeitsprobe (6), die aus der Matrix (2) des Einsatzes (12) entnommen und in die Pipettenspitze (10) gesaugt wurde, wobei die ausgestoßene Flüssigkeitsprobe (6) mindestens ein zweites Mal in die Matrix (2) des Einsatzes (12) fließt; und
Ausüben, unter Verwendung der Pipettenspitze (10) in der zumindest teilweise aufgenommenen Position innerhalb der mittleren Bohrung (36) des Einsatzes (12), mindestens ein zweites Mal eines negativen hydraulischen oder pneumatischen Drucks auf die Flüssigkeitsprobe (6) innerhalb der Matrix (2) durch die Pumpe der Probendosiervorrichtung, wodurch Flüssigkeitsprobe (6), die frei von der Zielkomponente ist oder eine verringerte Konzentration davon aufweist, mindestens ein zweites Mal aus der Matrix (2) des Einsatzes (12) entnommen und erneut in die Pipettenspitze (10) gesaugt wird.

14. Verfahren nach Anspruch 12, wobei in dem Einsatz (12) in der einen oder den mehreren Seitenwänden (26) ein oder mehrere Flüssigkeitsströmungskanäle (48) gebildet sind, sich der eine oder die mehreren Flüssigkeitsströmungskanäle (48) in Längsrichtung entlang mindestens eines Abschnitts der einen oder der mehreren Seitenwände (26) erstrecken, der eine oder die mehreren Kanäle (48) in Fluidverbindung mit der Matrix (2) des Einsatzes (12) sind; und
wobei der Schritt eines Ausstoßens des Volumens der Flüssigkeitsprobe (6) aus der Pipettenspitze (10) in den Einsatz (12) den Teilschritt eines Drückens der aus der Pipettenspitze (10) ausgestoßene Flüssigkeitsprobe (6) in den einen oder die mehreren Flüssigkeitsströmungskanäle (48) beinhaltet.

15. Verfahren nach Anspruch 12, wobei der Einsatz (12) innerhalb des inneren Hohlraums des Mischbechers (4) positioniert ist, so dass die untere Wand (40) des Einsatzes (12) von der inneren Bodenfläche (30) des Mischbechers (4) beabstandet ist, um damit eine Kammer (32) zum Aufnehmen der Flüssigkeitsprobe (6) zu definieren; und
wobei der Schritt eines Ausstoßens des Volumens der Flüssigkeitsprobe (6) aus der Pipettenspitze (10) in den Einsatz (12) den Teilschritt eines Drückens der aus der Pipettenspitze (10) ausgestoßene Flüssigkeitsprobe (6) in die Flüssigkeitsproben-Aufnahmekammer (32) beinhaltet.

16. Verfahren nach Anspruch 12, wobei der Schritt eines Absenkens der Pipettenspitze (10) in den Mischbecher (4), sodass die Pipettenspitze (10) zumindest teilweise von der mittleren Bohrung (36) des Einsatzes (12) aufgenommen ist, den Teilschritt eines Bildens einer im Wesentlichen flüssigkeitsdichten Dichtung zwischen der Pipettenspitze (10) und einer Innenwand (44) des Einsatzes (12), die die mittlere Bohrung (36) davon definiert, beinhaltet.

17. Verfahren nach Anspruch 12, wobei die mittlere Bohrung (36) des Einsatzes (12) dimensioniert ist, um einen ringförmigen Raum (42) zwischen mindestens einem Abschnitt einer Innenwand (44) des Einsatzes (12), die die mittlere Bohrung (36) definiert, und mindestens einem Abschnitt der Pipettenspitze (10) bereitzustellen, wenn die Pipettenspitze (10) zumindest teilweise von der mittleren Bohrung (36) des Einsatzes (12) aufgenommen ist, wobei der ringförmige Raum (42) in Fluidverbindung mit der Matrix (2) des Einsatzes (12) ist; und
wobei der Schritt eines Ausstoßens des Volumens der Flüssigkeitsprobe (6) aus der Pipettenspitze (10) in den Einsatz (12) den Teilschritt eines Drückens der aus der Pipettenspitze (10) ausgestoßene Flüssigkeitsprobe (6) in den ringförmigen Raum (42) beinhaltet.

## Revendications

1. Insert (12) monté ou insérable dans une coupelle de mélange (4) et utilisé par un analyseur chimique automatisé pour éliminer un composant ciblé d'un échantillon liquide (6), l'analyseur chimique automatisé comportant un dispositif de dosage d'échantillon ayant une pipette (8) équipée d'un embout de pipette jetable (10) et d'une pompe reliée de manière fonctionnelle à la pipette (8) pour aspirer l'échantillon liquide (6) dans l'embout de pipette (10) et expulser l'échantillon liquide (6) de celui-ci, l'insert (12) comprenant :
une matrice poreuse (2) formée de ou portant des particules fonctionnalisées à base de billes immobilisées (50) dans un état immobilisé ayant des propriétés telles que le composant ciblé de l'échantillon liquide (6) adhère aux particules fonctionnalisées à base de billes immobilisées (50), la matrice poreuse (2) ayant une porosité prédéterminée qui permet à l'échantillon liquide (6) de s'écouler à travers celle-ci ;
dans lequel, lorsque l'échantillon liquide (6) est expulsé de l'embout de pipette (10), l'échantillon liquide (6) est tiré jusque dans la matrice (2) de l'insert (12) par action capillaire ou forcé jusque dans la matrice (2) par une pression hydraulique ou pneumatique positive exercée sur celle-ci par la pompe du dispositif de dosage d'échantillon, après quoi le composant ciblé de l'échantillon liquide (6) adhère aux particules fonctionnalisées à base de billes immobilisées (50) de la matrice (2) ; et
dans lequel, sous une pression hydraulique ou pneumatique négative exercée sur l'échantillon liquide (6) au sein de la matrice (2) par la pompe du dispositif de dosage d'échantillon, l'échantillon liquide (6) exempt du composant ciblé ou ayant une concentration réduite en celui-ci est tiré depuis la matrice (2) de l'insert (12) et aspiré jusque dans l'embout de pipette (10) pour un test ultérieur par l'analyseur chimique automatisé.

2. Insert (12) selon la revendication 1, dans lequel l'insert (12) présente une ou plusieurs parois latérales (26), une paroi de sommet (38) et une paroi de fond (40) disposées à l'opposé de la paroi de sommet (38), les une ou plusieurs parois latérales (26) s'étendant entre la paroi de sommet (38) et la paroi de fond (40) ; et
dans lequel l'insert (12) présente un ou plusieurs canaux d'écoulement de liquide (48) formés dans les une ou plusieurs parois latérales (26), les un ou plusieurs canaux d'écoulement de liquide (48) s'étendant longitudinalement le long d'au moins une portion des une ou plusieurs parois latérales (26), les un ou plusieurs canaux (48) étant en communication fluidique avec la matrice (2) de l'insert (12).

3. Insert (12) selon la revendication 1, dans lequel l'insert (12) présente une ou plusieurs parois latérales (26), une paroi de sommet (38) et une paroi de fond (40) disposées à l'opposé de la paroi de sommet (38), les une ou plusieurs parois latérales (26) s'étendant entre la paroi de sommet (38) et la paroi de fond (40) ; et
dans lequel l'insert (12) présente un alésage central (36) formé axialement dans celui-ci, l'alésage central (36) passant à travers l'insert (12) depuis la paroi de sommet (38) de celui-ci jusqu'à la paroi de fond (40) de celui-ci, l'alésage central (36) étant dimensionné pour recevoir au moins partiellement l'embout de pipette (10) du dispositif de dosage d'échantillon.

4. Insert (12) selon la revendication 3, dans lequel la paroi de sommet (38) de l'insert (12) présente un orifice d'entrée en forme d'entonnoir (46) formé dans celle-ci, l'orifice d'entrée en forme d'entonnoir (46) étant en alignement et en communication fluidique avec l'alésage central (36).

5. Insert (12) selon la revendication 1, dans lequel l'insert (12) présente une ou plusieurs parois latérales (26), une paroi de sommet (38) et une paroi de fond (40) disposées à l'opposé de la paroi de sommet (38), les une ou plusieurs parois latérales (26) s'étendant entre la paroi de sommet (38) et la paroi de fond (40) ; et
dans lequel l'insert (12) comporte au moins une entretoise (34), l'au moins une entretoise (34) s'étendant vers l'extérieur depuis la paroi de fond (40) de l'insert (12) sur une distance prédéterminée, l'au moins une entretoise (34) contribuant à définir, entre la paroi de fond (40) de l'insert (12) et la coupelle de mélange (4), une chambre (32) destinée à recevoir l'échantillon liquide (6) lorsque l'insert (12) est reçu par la coupelle de mélange (4).

6. Insert (12) selon la revendication 1, dans lequel l'insert (12) présente une ou plusieurs parois latérales (26), une paroi de sommet (38) et une paroi de fond (40) disposées à l'opposé de la paroi de sommet (38), les une ou plusieurs parois latérales (26) s'étendant entre la paroi de sommet (38) et la paroi de fond (40) ; et
dans lequel l'insert (12) est formé avec 1) une forme généralement cylindrique ; ou 2) une forme généralement tronconique et comporte une portion supérieure généralement circulaire (20) ayant un premier diamètre et située au niveau ou près de la paroi de sommet (38) de celui-ci, une portion médiane conique (22) de diamètre décroissant, s'étendant à partir de la portion supérieure (20), et une portion inférieure généralement cylindrique (24) s'étendant à partir de la portion médiane (22) et située au niveau ou près de la portion de fond (40) de celui-ci, la portion inférieure (24) ayant un deuxième diamètre qui est inférieur au premier diamètre de la portion supérieure (20).

7. Insert (12) selon la revendication 1, dans lequel la matrice (2) de l'insert (12) est formée d'un milieu qui maintient dans un état immobilisé les particules fonctionnalisées à base de billes immobilisées (50), telles que des nanobilles, ou des billes IMAC (chromatographie d'affinité sur ions métalliques immobilisés), ou des billes à base d'agarose, ou des billes à base de silice.

8. Insert (12) selon la revendication 1, dans lequel la matrice (2) de l'insert (12) est formée de particules fonctionnalisées à base de billes immobilisées (50), telles que des nanobilles, ou des billes IMAC (chromatographie d'affinité sur ions métalliques immobilisés), ou des billes à base d'agarose, ou des billes à base de silice.

9. Insert (12) selon la revendication 1, dans lequel la matrice (2) est formée à partir d'un matériau à base de fibres de verre qui contient un liant plastique.

10. Insert (12) selon la revendication 1, dans lequel la matrice (2) est formée à partir d'un matériau poreux choisi dans le groupe constitué par : des matériaux naturels, synthétiques ou d'origine naturelle ou modifiés par synthèse ; des matériaux fibreux ; des membranes de matériaux cellulosiques, y compris le papier, la cellulose et des dérivés de cellulose, y compris l'acétate de cellulose et la nitrocellulose, la fibre de verre, un matériau à fibres de verre, le tissu, à la fois d'origine naturelle, y compris le coton, et synthétique, y compris le nylon ; des gels poreux, y compris le gel de silice, l'agarose, le dextrane et la gélatine ; des matrices fibreuses poreuses ; des matériaux à base d'amidon ; des chaînes de dextrane réticulées ; des matériaux céramiques ; des matériaux oléfiniques et thermoplastiques, y compris des films de chlorure de polyvinyle, de polyéthylène, d'acétate de polyvinyle, de polyamide, de polycarbonate, de polystyrène, de copolymères d'acétate de vinyle et de chlorure de vinyle et des combinaisons de chlorure de polyvinyle-silice.

11. Insert (12) selon la revendication 1, dans lequel la matrice (2) est choisie dans le groupe de matériaux constitué par : des billes de polyéthylène fritté ; de la nitrocellulose ; des fibres de verre ; et du papier.

12. Procédé utilisant un analyseur chimique automatisé pour éliminer un composant ciblé d'un échantillon liquide (6), l'analyseur chimique automatisé comportant une coupelle d'échantillon, et un dispositif de dosage d'échantillon ayant une pipette (8) munie d'un embout de pipette jetable (10) et une pompe connectée de manière fonctionnelle à la pipette (8) pour aspirer l'échantillon liquide (6) jusque dans l'embout de pipette (10) et expulser l'échantillon liquide (6) de celui-ci, le procédé comprenant les étapes suivantes :
l'aspiration jusque dans l'embout de pipette (10) d'un volume de l'échantillon liquide (6) contenu dans la coupelle d'échantillon ;
le positionnement de l'embout de pipette (10) contenant le volume de l'échantillon liquide (6) sur une coupelle de mélange (4), la coupelle de mélange (4) définissant une cavité intérieure destinée à recevoir l'échantillon liquide (6) et ayant une surface de fond intérieure (30), la coupelle de mélange (4) ayant en outre un insert (12) monté au sein de la cavité intérieure de celle-ci, dans lequel l'insert (12) comporte une matrice poreuse (2) formée de ou portant des particules fonctionnalisées à base de billes immobilisées (50) dans un état immobilisé ayant des propriétés telles que le composant ciblé de l'échantillon liquide (6) adhère aux particules fonctionnalisées à base de billes immobilisées (50), la matrice poreuse (2) ayant une porosité prédéterminée qui permet à l'échantillon liquide (6) de s'écouler à travers celle-ci, l'insert (12) présentant en outre une ou plusieurs parois latérales (26), une paroi de sommet (38) et une paroi de fond (40) disposées à l'opposé de la paroi de sommet (38), les une ou plusieurs parois latérales (26) s'étendant entre la paroi de sommet (38) et la paroi de fond (40), l'insert (12) présentant un alésage central (36) formé axialement dans celui-ci, l'alésage central (36) passant à travers l'insert (12) depuis la paroi de sommet (38) de celui-ci jusqu'à la paroi de fond (40) de celui-ci, l'alésage central (36) étant dimensionné pour recevoir au moins partiellement l'embout de pipette (10) du dispositif de dosage d'échantillon ;
l'abaissement de l'embout de pipette (10) jusque dans la coupelle de mélange (4) de telle sorte que l'embout de pipette (10) est au moins partiellement reçu par l'alésage central (36) de l'insert (12) disposé au sein de la coupelle de mélange (4) ;
l'expulsion du volume d'échantillon liquide (6) de l'embout de pipette (10) jusque dans l'insert (12), dans lequel l'échantillon liquide (6) expulsé de l'embout de pipette (10) est tiré jusque dans la matrice (2) de l'insert (12) par action capillaire ou forcé jusque dans la matrice (2) par une pression hydraulique ou pneumatique positive exercée sur celle-ci par la pompe du dispositif de dosage d'échantillon, après quoi le composant ciblé de l'échantillon liquide (6) adhère aux particules fonctionnalisées à base de billes immobilisées (50) de la matrice (2) ; et
l'application, à l'aide de l'embout de pipette (10) dans la position au moins partiellement reçue au sein de l'alésage central (36) de l'insert (12), d'une pression hydraulique ou pneumatique négative exercée sur l'échantillon liquide (6) au sein de la matrice (2) par la pompe du dispositif de dosage d'échantillon, moyennant quoi l'échantillon liquide (6) exempt du composant ciblé ou ayant une concentration réduite en celui-ci est tiré depuis la matrice (2) de l'insert (12) et aspiré jusque dans l'embout de pipette (10) pour un test ultérieur par l'analyseur chimique automatisé.

13. Procédé selon la revendication 12, qui comprend en outre les étapes suivantes :
l'expulsion depuis l'embout de pipette (10) jusque dans l'insert (12) au moins une deuxième fois, l'échantillon liquide (6) étant tiré depuis la matrice (2) de l'insert (12) et aspiré jusque dans l'embout de pipette (10), de telle sorte que l'échantillon liquide (6) expulsé s'écoule jusque dans la matrice (2) de l'insert (12) au moins une deuxième fois ; et
l'application, à l'aide de l'embout de pipette (10) dans la position au moins partiellement reçue au sein de l'alésage central (36) de l'insert (12), au moins une deuxième fois d'une pression hydraulique ou pneumatique négative exercée sur l'échantillon liquide (6) au sein de la matrice (2) par la pompe du dispositif de dosage d'échantillon, moyennant quoi l'échantillon liquide (6) exempt du composant ciblé ou ayant une concentration réduite en celui-ci est tiré depuis la matrice (2) de l'insert (12) au moins une deuxième fois et à nouveau aspiré jusque dans l'embout de pipette (10).

14. Procédé selon la revendication 12, dans lequel l'insert (12) présente un ou plusieurs canaux d'écoulement de liquide (48) formés dans les une ou plusieurs parois latérales (26), les un ou plusieurs canaux d'écoulement de liquide (48) s'étendant longitudinalement le long d'au moins une portion des une ou plusieurs parois latérales (26), les un ou plusieurs canaux (48) étant en communication fluidique avec la matrice (2) de l'insert (12) ; et
dans lequel l'étape d'expulsion du volume d'échantillon liquide (6) depuis l'embout de pipette (10) jusque dans l'insert (12) comprend la sous-étape de forçage de l'échantillon liquide (6) expulsé depuis l'embout de pipette (10) jusque dans les un ou plusieurs canaux d'écoulement de liquide (48).

15. Procédé selon la revendication 12, dans lequel l'insert (12) est positionné au sein de la cavité intérieure de la coupelle de mélange (4) de telle sorte que la paroi de fond (40) de l'insert (12) est espacée de la surface de fond intérieure (30) de la coupelle de mélange (4) pour définir avec celle-ci une chambre (32) destinée à recevoir l'échantillon liquide (6) ; et
dans lequel l'étape d'expulsion du volume d'échantillon liquide (6) depuis l'embout de pipette (10) jusque dans l'insert (12) comprend la sous-étape de forçage de l'échantillon liquide (6) expulsé depuis l'embout de pipette (10) jusque dans la chambre de réception d'échantillon liquide (32).

16. Procédé selon la revendication 12, dans lequel l'étape d'abaissement de l'embout de pipette (10) jusque dans la coupelle de mélange (4) de telle sorte que l'embout de pipette (10) est au moins partiellement reçu par l'alésage central (36) de l'insert (12) comporte la sous-étape de formation d'un joint sensiblement étanche aux liquides entre l'embout de pipette (10) et une paroi intérieure (44) de l'insert (12) qui définit l'alésage central (36) de celui-ci.

17. Procédé selon la revendication 12, dans lequel l'alésage central (36) de l'insert (12) est dimensionné pour fournir un espace annulaire (42) entre au moins une portion d'une paroi intérieure (44) de l'insert (12) définissant l'alésage central (36) et au moins une portion de l'embout de pipette (10) lorsque l'embout de pipette (10) est au moins partiellement reçu par l'alésage central (36) de l'insert (12), l'espace annulaire (42) étant en communication fluidique avec la matrice (2) de l'insert (12) ; et
dans lequel l'étape d'expulsion du volume d'échantillon liquide (6) depuis l'embout de pipette (10) jusque dans l'insert (12) comprend la sous-étape de forçage de l'échantillon liquide (6) expulsé depuis l'embout de pipette (10) jusque dans l'espace annulaire (42).
